# EUROPEAN PATENT APPLICATION

(11) **EP 4 717 733 A1**
(43) Date of publication of application: **01.04.2026**
(21) Application number: 24810693.2
(22) Date of filing: 21.03.2024
(51) Int. Cl.: C08L 77/06, C08J 7/00, C08K 7/14

(54) **POLYAMIDE RESIN COMPOSITION**

(30) Priority: 22.05.2023 JP 2023083765
(71) Applicant: UBE Corporation, Ube-shi, Yamaguchi 755-8633 (JP)
(72) Inventor: YASUI Tetsuya, Ube-shi, Yamaguchi 755-8633 (JP); HORIIKE Yuma, Ube-shi, Yamaguchi 755-8633 (JP)
(74) Representative: Hoffmann Eitle
(86) International application number: PCT/JP2024/010989
(87) International publication number: WO 2024/241685

(57) **Abstract**

The present invention relates to a polyamide resin composition including: 55.0 to 96.0 mass% of an aliphatic polyamide resin (A), 1.0 to 10.0 mass% of a crosslinking agent (B), and 3.0 to 28.0 mass% of a glass fiber (C) in 100 mass% of the polyamide resin composition, wherein the aliphatic polyamide resin (A) is at least one selected from the group consisting of a polycondensate (A-1) between a diamine having 4 to 6 carbon atoms and a dicarboxylic acid having 8 to 13 carbon atoms, and a polycondensate (A-2) between a diamine having 8 to 13 carbon atoms and a dicarboxylic acid having 4 to 6 carbon atoms; and from the viewpoint that the polyamide resin composition can reduce the amount of resin components, metal components, or degraded components thereof discharged due to abrasion, and can be used as a highly reliable member over a long period of time, the polyamide resin composition can contribute to achieving Goals 12, 13, 15, and the like of Sustainable Development Goals (SDGs).

## Description

### [Technical Field]

The present invention relates to a polyamide resin composition.

### [Background Art]

Polyamide resins have excellent mechanical properties, heat resistance, and chemical resistance, and are therefore widely used as engineering plastics for automobile parts, mechanical parts, sliding parts, electrical and electronic parts, and the like.

In order to improve slidability and strength for use in these applications, a polyamide resin composition in which a polyamide resin is blended with a crosslinking agent has been known (Patent Literatures 1 to 3).

In Patent Literature 1, polyamide 12 or the like is used as a polyamide resin. In Patent Literature 2, polyamide 46, polyamide 66, polyamide 6, polyamide 9T, polyamide 6/11, and the like are used as a polyamide resin. Example 15 of Patent Literature 2 describes a polyamide resin composition containing 30 mass% of a glass filler. In Patent Literature 3, polyamide 46, polyamide 66, and the like are used as a polyamide resin. Examples of Patent Literature 3 describe a polyamide resin composition containing no glass filler. In Patent Literatures 1 to 3, a polyamide resin composition is irradiated with an active energy ray to crosslink a crosslinking agent, thereby improving slidability and strength.

### [Citation List]

### [Patent Literature]

[Patent Literature 1] WO 2023/032780 A1
[Patent Literature 2] JP 6283453 B1
[Patent Literature 3] JP 2015-209512 A

### [Summary of Invention]

### [Technical Problem]

The molded body of the polyamide resin composition as described in Patent Literature 1 still has room for improvement in mechanical properties. The molded body of the polyamide resin composition containing 30 mass% of a glass filler as described in Example 15 of Patent Literature 2 has a problem of increasing the density. The molded body of the polyamide resin composition containing no glass filler as described in Patent Literature 3 has a problem in mechanical properties.

An object of the present invention is to provide a polyamide resin composition having good mechanical properties such as tensile properties, bending properties, and impact resistance and having low water absorption and density.

### [Solution to Problem]

The present invention relates to the following [1] to [14].
[1] A polyamide resin composition including: 55.0 to 96.0 mass% of an aliphatic polyamide resin (A), 1.0 to 10.0 mass% of a crosslinking agent (B), and 3.0 to 28.0 mass% of a glass fiber (C) in 100 mass% of the polyamide resin composition, wherein the aliphatic polyamide resin (A) is at least one selected from the group consisting of a polycondensate (A-1) between a diamine having 4 to 6 carbon atoms and a dicarboxylic acid having 8 to 13 carbon atoms, and a polycondensate (A-2) between a diamine having 8 to 13 carbon atoms and a dicarboxylic acid having 4 to 6 carbon atoms.
[2] The polyamide resin composition according to [1], wherein the aliphatic polyamide resin (A) has a relative viscosity of 2.0 to 4.0.
[3] The polyamide resin composition according to [1] or [2], wherein the polycondensate (A-1) is at least one selected from the group consisting of polytetramethylene suberamide (polyamide 48), polytetramethylene azelamide (polyamide 49), polytetramethylene sebacamide (polyamide 410), polytetramethylene undecamide (polyamide 411), polytetramethylene dodecamide (polyamide 412), polytetramethylene tridecamide (polyamide 413), polyhexamethylene suberamide (polyamide 58), polypentamethylene azelamide (polyamide 59), polypentamethylene sebacamide (polyamide 510), polypentamethylene undecamide (polyamide 511), polypentamethylene dodecamide (polyamide 512), polypentamethylene tridecamide (polyamide 513), polyhexamethylene suberamide (polyamide 68), polyhexamethylene azelamide (polyamide 69), polyhexamethylene sebacamide (polyamide 610), polyhexamethylene undecamide (polyamide 611), polyhexamethylene dodecamide (polyamide 612), and polyhexamethylene tridecamide (polyamide 613).
[4] The polyamide resin composition according to any one of [1] to [3], wherein the polycondensate (A-2) is at least one selected from the group consisting of polyoctamethylene succinamide (polyamide 84), polyoctamethylene glutaramide (polyamide 85), polyoctamethylene adipamide (polyamide 86), polynonamethylene succinamide (polyamide 94), polynonamethylene glutaramide (polyamide 95), polynonamethylene adipamide (polyamide 96), polydecamethylene succinamide (polyamide 104), polydecamethylene glutaramide (polyamide 105), polydecamethylene adipamide (polyamide 106), polyundecamethylene succinamide (polyamide 114), polyundecamethylene glutaramide (polyamide 115), polyundecamethylene adipamide (polyamide 116), polydodecamethylene succinamide (polyamide 124), polydodecamethylene glutaramide (polyamide 125), polydodecamethylene adipamide (polyamide 126), polytridecamethylene succinamide (polyamide 134), polytridecamethylene glutaramide (polyamide 135), and polytridecamethylene adipamide (polyamide 136).
[5] The polyamide resin composition according to any one of [1] to [4], wherein the crosslinking agent (B) is at least one selected from the group consisting of triallyl cyanurate, triallyl isocyanurate, trimethallyl isocyanurate, diallyl phthalate, and diallyl benzene phosphonate.
[6] The polyamide resin composition according to any one of [1] to [5], including 0.1 to 1.5 mass% of a heat resistance agent in 100 mass% of the polyamide resin composition.
[7] The polyamide resin composition according to any one of [1] to [6], being for sliding use.
[8] A molded body including the polyamide resin composition according to any one of [1] to [7].
[9] A molded body obtained by molding the polyamide resin composition according to any one of [1] to [7], followed by irradiation with an active energy ray.
[10] A molded body obtained by irradiating an active energy ray to the polyamide resin composition according to any one of [1] to [7], followed by molding.
[11] The molded body according to any one of [8] to [10], having a density of 1.10 to 1.25 g/cm³.
[12] The molded body according to any one of [8] to [11], being a sliding member.
[13] A method for producing a molded body, the method including: a step of molding the polyamide resin composition according to any one of [1] to [7] to obtain a molded body of the polyamide resin composition; and a step of irradiating an active energy ray to the molded body of the polyamide resin composition obtained in the above step.
[14] A method for producing a molded body, the method including: a step of irradiating an active energy ray to the polyamide resin composition according to any one of [1] to [7] to obtain an activation energy-irradiated polyamide resin composition; and a step of molding the activation energy-irradiated polyamide resin composition obtained in the above step.

### [Advantageous Effects of Invention]

The present invention provides a polyamide resin composition having good mechanical properties such as tensile properties, bending properties, and impact resistance and having low water absorption and density.

### [Description of Embodiments]

In the specification, a numerical range indicated using "to" indicates a range including the numerical values described before and after "to" as a minimum value and a maximum value, respectively. When a plurality of substances corresponding to each component is present in the composition, the amount of each component in the composition means the total amount of the plurality of substances present in the composition unless otherwise specified. In the specification, the term "step" includes not only an independent step but also a step that cannot be clearly distinguished from other steps as long as the intended purpose of the step is achieved. In the specification, a content is a value obtained by rounding off the value one digit below the described value.

### [Polyamide Resin Composition]

The polyamide resin composition includes: 55.0 to 96.0 mass% of an aliphatic polyamide resin (A), 1.0 to 10.0 mass% of a crosslinking agent (B), and 3.0 to 28.0 mass% of a glass fiber (C) in 100 mass% of the polyamide resin composition, wherein the aliphatic polyamide resin (A) is at least one selected from the group consisting of a polycondensate (A-1) between a diamine having 4 to 6 carbon atoms and a dicarboxylic acid having 8 to 13 carbon atoms, and a polycondensate (A-2) between a diamine having 8 to 13 carbon atoms and a dicarboxylic acid having 4 to 6 carbon atoms.

The polyamide resin composition has good mechanical properties and low water absorption and density, and also has: a small resin abrasion amount when the molded body including the polyamide resin composition (resin molded body) is used as a sliding member; and a small metal abrasion amount of the molded body made of metal (metal molded body) that is in contact with the resin molded body. Here, the "small abrasion amount" means that when the resin molded body and the metal molded body slide with each other, each molded body has a small abrasion amount, and the abrasion amount of each molded body is preferably small in order to maintain a favorable sliding state. From the viewpoint that the polyamide resin composition can reduce the amount of resin components and metal components (including degraded components thereof) discharged due to abrasion, and can be used as a highly reliable member over a long period of time, the polyamide resin composition can contribute to achieving Goals 12, 13, 15, and the like of Sustainable Development Goals (SDGs).

### [Aliphatic Polyamide Resin (A)]

The polyamide resin composition includes an aliphatic polyamide resin (A). The aliphatic polyamide resin (A) is at least one selected from the group consisting of a polycondensate (A-1) between a diamine having 4 to 6 carbon atoms and a dicarboxylic acid having 8 to 13 carbon atoms, and a polycondensate (A-2) between a diamine having 8 to 13 carbon atoms and a dicarboxylic acid having 4 to 6 carbon atoms.

### <Polycondensate (A-1) between Diamine Having 4 to 6 Carbon Atoms and Dicarboxylic Acid Having 8 to 13 Carbon Atoms>

Examples of the diamine having 4 to 6 carbon atoms include tetramethylenediamine, pentamethylenediamine, and hexamethylenediamine. Examples of the dicarboxylic acid having 8 to 13 carbon atoms include suberic acid, azelaic acid, sebacic acid, undecanedioic acid, dodecanedioic acid, and tridecanedioic acid.

The polycondensate (A-1) between a diamine having 4 to 6 carbon atoms and a dicarboxylic acid having 8 to 13 carbon atoms is preferably at least one selected from the group consisting of polytetramethylene suberamide (polyamide 48), polytetramethylene azelamide (polyamide 49), polytetramethylene sebacamide (polyamide 410), polytetramethylene undecamide (polyamide 411), polytetramethylene dodecamide (polyamide 412), polytetramethylene tridecamide (polyamide 413), polyhexamethylene suberamide (polyamide 58), polypentamethylene azelamide (polyamide 59), polypentamethylene sebacamide (polyamide 510), polypentamethylene undecamide (polyamide 511), polypentamethylene dodecamide (polyamide 512), polypentamethylene tridecamide (polyamide 513), polyhexamethylene suberamide (polyamide 68), polyhexamethylene azelamide (polyamide 69), polyhexamethylene sebacamide (polyamide 610), polyhexamethylene undecamide (polyamide 611), polyhexamethylene dodecamide (polyamide 612), and polyhexamethylene tridecamide (polyamide 613).

### <Polycondensate (A-2) between Diamine Having 8 to 13 Carbon Atoms and Dicarboxylic Acid Having 4 to 6 Carbon Atoms>

Examples of the diamine having 8 to 13 carbon atoms include octamethylenediamine, nonamethylenediamine, decamethylenediamine, undecamethylenediamine, dodecamethylenediamine, and tridecanediamine. Examples of the dicarboxylic acid having 4 to 6 carbon atoms include succinic acid, glutaric acid, and adipic acid.

The polycondensate (A-2) between a diamine having 8 to 13 carbon atoms and a dicarboxylic acid having 4 to 6 carbon atoms is preferably at least one selected from the group consisting of polyoctamethylene succinamide (polyamide 84), polyoctamethylene glutaramide (polyamide 85), polyoctamethylene adipamide (polyamide 86), polynonamethylene succinamide (polyamide 94), polynonamethylene glutaramide (polyamide 95), polynonamethylene adipamide (polyamide 96), polydecamethylene succinamide (polyamide 104), polydecamethylene glutaramide (polyamide 105), polydecamethylene adipamide (polyamide 106), polyundecamethylene succinamide (polyamide 114), polyundecamethylene glutaramide (polyamide 115), polyundecamethylene adipamide (polyamide 116), polydodecamethylene succinamide (polyamide 124), polydodecamethylene glutaramide (polyamide 125), polydodecamethylene adipamide (polyamide 126), polytridecamethylene succinamide (polyamide 134), polytridecamethylene glutaramide (polyamide 135), and polytridecamethylene adipamide (polyamide 136).

### <Preferred Embodiment of Aliphatic Polyamide Resin (A) >

From the viewpoint of easy availability of raw materials, the aliphatic polyamide resin (A) is preferably a polycondensate (A-1) between a diamine having 4 to 6 carbon atoms and a dicarboxylic acid having 8 to 13 carbon atoms, and is particularly preferably polytetramethylene sebacamide (polyamide 410), polypentamethylene sebacamide (polyamide 510), polypentamethylene dodecamide (polyamide 512), polyhexamethylene sebacamide (polyamide 610), polyhexamethylene dodecamide (polyamide 612), polydecamethylene succinamide (polyamide 104), polydecamethylene adipamide (polyamide 106), or polydodecamethylene adipamide (polyamide 126).

From the viewpoint of further reducing the polyamide resin abrasion amount from the molded body using the polyamide resin composition described later, the relative viscosity of the aliphatic polyamide resin (A) is preferably 2.0 to 4.0, more preferably 2.1 to 3.8, and particularly preferably 2.5 to 3.5. The relative viscosity can be measured in accordance with JIS K 6920, where 1 g of the aliphatic polyamide resin (A) is dissolved in 100 ml of 96% sulfuric acid, and measured at 25°C.

From the viewpoint of molding processability and mechanical properties, the melting point of the aliphatic polyamide resin (A) is preferably 180 to 250°C, and more preferably 200 to 230°C. The melting point may be a temperature of a peak value of a melting curve measured by using a differential scanning calorimeter in accordance with ISO 11357-3, where a sample is heated to a temperature equal to or higher than an expected melting point, and then the sample is cooled to 30°C at a rate of 10°C per minute, left as it is for about 1 minute, and then heated at a rate of 20°C per minute.

The terminal amino group concentration of the aliphatic polyamide resin (A) is preferably in a range of 10 µmol/g or more, and more preferably in a range of 15 µmol/g or more and 50 µmol/g or less, in terms of terminal amino group concentration determined by neutralization titration where the resin is dissolved in a mixed solvent of phenol and methanol. Within the above range, molding processability and mechanical properties can be sufficiently obtained.

The aliphatic polyamide resin (A) may be one component or a combination of two or more components.

### <Crosslinking Agent (B)>

Examples of the crosslinking agent (B) include polyfunctional (meth)allylic monomers, polyfunctional (meth)acrylic monomers, and mixed monomers thereof. The polyfunctional (meth)allylic monomer is a polyfunctional allylic monomer and a polyfunctional methallylic monomer. The polyfunctional (meth)acrylic monomer is a polyfunctional acrylic monomer and a polyfunctional methacrylic monomer.

Examples of the polyfunctional (meth)allylic monomer include triallyl cyanurate, triallyl isocyanurate, trimethallyl isocyanurate, diallyl phthalate, diallyl benzene phosphonate, and a mixture thereof. From the viewpoint of ease of crosslinking by electron beam irradiation, the polyfunctional (meth)allylic monomer is preferably at least one selected from the group consisting of triallyl cyanurate, triallyl isocyanurate, trimethallyl isocyanurate, diallyl phthalate, and diallyl benzene phosphonate.

Examples of the polyfunctional (meth)acrylic monomer include ethylene oxide-modified bisphenol A di(meth)acrylate, 1,4-butanediol di(meth)acrylate, diethylene glycol di(meth)acrylate, dipentaerythritol hexaacrylate, dipentaerythritol monohydroxy pentaacrylate, caprolactone-modified dipentaerythritol hexaacrylate, pentaerythritol tri(meth)acrylate, pentaerythritol tetra(meth)acrylate, polyethylene glycol di(meth)acrylate, trimethylolpropane triacrylate, EO-modified trimethylolpropane tri(meth)acrylate, PO-modified trimethylolpropane tri(meth)acrylate, tris(acryloxyethyl)isocyanurate, tris(methacryloxyethyl)isocyanurate, and a mixture thereof. From the viewpoint of low skin irritation, the polyfunctional (meth)acrylic monomer is preferably tris(acryloxyethyl)isocyanurate (triacrylic acid ester of tris(2-hydroxyethyl)isocyanuric acid).

The crosslinking agent (B) is preferably a polyfunctional (meth)allylic monomer.

The crosslinking agent (B) may be one component or a combination of two or more components. As the crosslinking agent (B), one supported on a carrier (for example, inorganic filler such as silicon dioxide) may be used, or one dissolved in a solvent may be used, as long as the effect of the present invention is not impaired.

### <Glass Fiber (C)>

In the glass fiber (C), the "fiber" refers to a shape having a fiber length of 0.3 mm or more and an aspect ratio (fiber length/diameter ratio) of 10 or more. In the polyamide resin composition, the glass fiber (C) includes those in which the glass fiber (C) is broken by melt-kneading as described later. Therefore, the content of the glass fiber (C) in the polyamide resin composition includes those that are broken and as a result no longer included in the definition of the "fiber" in the specification. The content of the glass fiber (C) in the polyamide resin composition coincides with the blending amount of the glass fiber as a raw material.

The glass fiber (C) may be surface-treated with a surface treatment agent and/or a binder. Furthermore, in order to improve workability, the glass fiber (C) may be converged or granulated by the surface treatment agent. Examples of the surface treatment agent and the binder include various coupling agents such as a silane coupling agent, a titanium-based coupling agent, an aluminum-based coupling agent, and a zirconia-based coupling agent; and water glass, methyl cellulose, carboxymethyl cellulose, hydroxyethyl cellulose, hydroxypropyl cellulose, starch, polyvinyl alcohol, an acrylic resin, an epoxy resin, a phenol resin, polyvinyl acetate, a polyurethane resin, an epoxy-based compound, an isocyanate-based compound, colloidal silica, colloidal alumina, a fatty acid, and a surfactant. The surface treatment agent and the binder may be used singly or in combination of two or more kinds thereof.

The surface treatment agent and the binder may be applied to the glass fiber (C) and dried in advance for surface treatment or converging treatment, or may be added at the same time as the glass fiber (C) during the preparation of the resin composition.

Examples of the glass constituting the glass fiber (C) include those having a composition of A-glass, C-glass, E-glass, R-glass, or the like. From the viewpoint of the thermal stability of the polyamide resin, the glass constituting the glass fiber (C) is preferably E-glass and/or R-glass.

As the raw material glass fiber, those having an average fiber size (average fiber diameter) of 3 to 40 µm can be used. From the viewpoint of dimensional stability and mechanical properties of the molded body formed from the composition, the average fiber size is preferably 5 to 35 µm.

The cross section of the raw material glass fiber is not particularly limited, and may have a circular shape or a non-circular shape (for example, a flat shape). When the cross section of the glass fiber is non-circular, the aspect ratio of the cross section (ratio of long axis of cross section/short axis of cross section) is preferably more than 1 and 8 or less, and particularly preferably 2 to 6. When the cross section of the raw material glass fiber has a non-circular shape, the average fiber size can be an average value of the long axis of the cross section and the short axis of the cross section.

The glass fiber may be used singly or in combination of two or more kinds thereof. Two or more kinds of glass fibers having different average fiber sizes may be used. Examples of the combination of glass fiber sizes include a combination of (C1) a glass fiber having an average fiber size of 5 to 11 µm and (C2) a glass fiber having an average fiber size of 13 to 35 µm.

The length (cut length) of the raw material glass fiber is not particularly limited, and is preferably 1 to 50 mm, and from the viewpoint of productivity, is particularly preferably 3 to 10 mm. Chopped strands having such a cut length are preferably used as the raw material glass fiber.

The average fiber length of the glass fiber in the polyamide resin composition is not particularly limited, and is preferably 50 to 1,000 µm, and from the viewpoint of mechanical properties and from the viewpoint of sufficiently fibrillating the glass fiber and uniformly dispersing the glass fiber in the material, is more preferably 100 to 700 µm.

The values of the average fiber size of the glass fiber and the length (cut length) of the raw material glass fiber as described above are values before being melt-kneaded with the aliphatic polyamide resin (A) or the like. The value of the average fiber length of the glass fiber in the polyamide resin composition is a value after being melt-kneaded with the aliphatic polyamide resin (A) or the like. The value after melt-kneading is a value in consideration of a case where, during the melt-kneading of raw materials in the production process of the polyamide composition, at least some glass fibers (C) are broken and dispersed in the polyamide composition.

The average fiber size of the raw material glass fiber and the length (cut length) of the raw material glass fiber can be observed by using an optical microscope. The average fiber size of the raw material glass fiber (C) and the length (cut length) of the raw material glass fiber may be catalog values.

The average fiber length of the glass fibers (C) in the polyamide resin composition can be observed with an optical microscope after the polyamide resin is dissolved from the polyamide resin composition using a solvent and separated from the glass fibers. The lengths of about 1,000 arbitrarily selected glass fibers are measured from the observed image using image analysis software, and the average value thereof is determined as the average fiber length.

Examples of commercially available products of the glass fiber (C) include product names ECS 03T-211DE, ECS 03T-249, ECS 03T-249H, ECS 03T-275, ECS 03T-275H, ECS 03T-289, ECS 03T-289H, ECS 03T-289DE, ECS 03T-920EW, and HP3610XM from Nippon Electric Glass Co., Ltd.; product names CS 3DE-456S, CSG 3J-820, CSG 3PA-820S, CS 3SH-223, and CS 3PE-454 from Nitto Boseki Co., Ltd.; and the like.

The glass fiber (C) may be one component or a combination of two or more components.

### <Optional Additive (D)>

The polyamide resin composition may contain, as an optional component, an optional additive (D) such as a functionalization imparting agent such as a heat resistance agent, an inorganic filler other than the glass fiber (C), a thermoplastic resin other than the aliphatic polyamide resin (A), an initiator, a catalyst, a stabilizer, a dye, a pigment, a particulate reinforcing material, a plasticizer, an antioxidant, a foaming agent, a weathering agent, a crystal nucleating agent, a crystallization accelerator, a lubricant, an antistatic agent, a flame retardant, a flame retardant aid, a colorant, and a solvent.

In the optional additives (D), those also functioning as an inorganic filler are included in the inorganic filler in the present invention. In the optional additives (D), those functioning as a heat resistance agent are included in the heat resistance agent. In the optional additives (D), the initiator, the catalyst, and/or the stabilizer may be included in the aliphatic polyamide resin (A) and/or the crosslinking agent (B).

### <<Heat Resistance Agent>>

The heat resistance agent is a component capable of improving the heat resistance and oxidation resistance of the molded body. Examples of the heat resistance agent include an inorganic heat resistance agent and/or an organic heat resistance agent, and an inorganic heat resistance agent is preferable.

### · Inorganic Heat Resistance Agent

Examples of the inorganic heat resistance agent include a copper compound, potassium halide, and a combination of a copper compound and potassium halide. The inorganic heat resistance agent is preferably a combination of a copper compound and potassium halide.

Examples of the copper compound include cuprous iodide, cuprous bromide, cupric bromide, and copper acetate. From the viewpoint of heat resistance and suppression of metal corrosion, the copper compound is preferably cuprous iodide. Examples of the potassium halide include potassium iodide, potassium bromide, and potassium chloride. From the viewpoint of heat resistance and long-term stability of the inorganic heat resistance agent, the potassium halide is preferably potassium iodide and/or potassium bromide. Examples of the combination of the copper compound and the potassium halide include a combination of cuprous iodide and potassium iodide and/or potassium bromide.

### · Organic Heat Resistance Agent

Examples of the organic heat resistance agent include phenolic compounds, phosphorus compounds, sulfur compounds, and nitrogen compounds. From the viewpoint of coloring the molded body, the organic heat resistance agent is preferably one or more selected from the group consisting of a phenolic compound and a phosphorus compound, and particularly preferably a hindered phenolic compound.

The phenolic compound is a compound having a phenol structure in the molecule. The phenolic compound is preferably a hindered phenolic compound or the like. In the specification, the "hindered phenol" refers to a compound having a substituent at the ortho position of the hydroxyl group of phenol (hereinafter, also referred to as "o-position"). The substituent at the o-position is not particularly limited, and examples thereof include an alkyl group, an alkoxy group, an amino group, and a halogen. Among them, alkyl groups such as a methyl group, an ethyl group, an n-propyl group, an i-propyl group, an n-butyl group, a sec-butyl group, an i-butyl group, and a t-butyl group are preferable, a bulky i-propyl group, a sec-butyl group, an i-butyl group, and a t-butyl group are more preferable, and a t-butyl group is most preferable. In addition, as for the o-position, it is preferable that both two o-positions with respect to the hydroxyl group of phenol have a substituent.

Examples of the hindered phenol having a t-butyl group at the o-position include N,N'-hexamethylene bis(3,5-di-t-butyl-4-hydroxy-hydrocinnamamide), pentaerythritol-tetrakis[3-(3,5-di-t-butyl-4-hydroxyphenyl)-propionate, ethylene bis(oxyethylene)bis[3-(5-tert-butyl-4-hydroxy-m-tolyl)propionate], and 3,9-bis[2-[3-(3-tert-butyl-4-hydroxy-5-methylphenyl)propionyloxy] -1,1-dimethylethyl]-2,4,8,10-tetraoxaspiro[5.5]undecane. Examples of commercially available products of the phenolic compound include "Irganox (registered trademark) 1010" (BASF) and "Sumilizer (registered trademark) GA-80" (SUMITOMO CHEMICAL COMPANY, LIMITED).

The phosphorus compound is a compound having a phosphorus atom in the molecule. Examples of the phosphorus compound include a phosphorous acid ester compound of a hindered phenol and a hypophosphorous acid ester compound of a hindered phenol. The phosphorus compound is preferably a phosphorous acid ester compound of a hindered phenol having a t-butyl group at the o-position and a hypophosphorous acid ester compound of a hindered phenol having a t-butyl group at the o-position, and particularly preferably a phosphorous acid ester compound of a hindered phenol having a t-butyl group at the o-position. Examples of the phosphorous acid ester compound of a hindered phenol having a t-butyl group at the o-position include tris(2,4-di-t-butylphenyl)phosphite and bis(2,6-di-t-butyl-4-methylphenyl)pentaerythritol diphosphite. Examples of the hypophosphorous acid ester compound of a hindered phenol having a t-butyl group at the o-position include a reaction product of biphenyl, phosphorus trichloride, and 2,4-di-tert-butylphenol containing p,p,p',p'-tetrakis(2,4-di-tert-butylphenoxy)-4,4-biphenyldiphosphine as a main component. Examples of commercially available products of the phosphorus compound include "Irgafos (registered trademark) 168" (BASF) and "Hostanox (registered trademark) P-EPQ" (Clariant Chemicals).

The sulfur compound is a compound having a sulfur atom in the molecule. Examples of the sulfur compound include distearyl-3,3-thiodipropionate, pentaerythrityl tetrakis(3-laurylthiopropionate), and didodecyl(3,3'-thiodipropionate).

Examples of the nitrogen compound include melamine, melamine cyanurate, benzoguanamine, dimethylol urea, and cyanuric acid.

### · Combination of inorganic heat resistance agent and organic heat resistance agent

Examples of the combination of the inorganic heat resistance agent and the organic heat resistance agent include a combination of the inorganic heat resistance agent and the nitrogen compound. The combination of the inorganic heat resistance agent and the nitrogen compound can more efficiently exhibit heat resistance effect.

### <<Other Inorganic Filler>>

In the present invention, another inorganic filler other than the glass fiber (C) can be present as long as the effect of the present invention is not impaired. Examples of such a component include inorganic fibers such as wollastonite, potassium titanate whisker, zinc oxide whisker, carbon fibers, alumina fibers, silicon carbide fibers, ceramic fibers, asbestos fibers, gypsum fibers, and metal fibers; silicates such as sericite, kaolin, mica, clay, bentonite, asbestos, talc, and alumina silicate; swellable layered silicates such as montmorillonite and synthetic mica; metal compounds such as alumina, silicon dioxide, magnesium oxide, zirconium oxide, titanium oxide, and iron oxide; carbonates such as calcium carbonate, magnesium carbonate, and dolomite; sulfates such as calcium sulfate and barium sulfate; and other inorganic fillers such as glass flakes, glass beads, ceramic beads, boron nitride, silicon carbide, and calcium phosphate.

### <<Thermoplastic Resin Other Than Aliphatic Polyamide Resin (A)>>

In the present invention, a thermoplastic resin other than the aliphatic polyamide resin (A) can be present as long as the effect of the present invention is not impaired. Examples of such a resin include semi-aromatic polyamide, polyolefin, halogenated polyolefin, polystyrene, polyvinyl acetate, polyurethane, ABS resin, acrylic resin, polyacetal, polycarbonate, and polyester.

Each of the optional additives (D) may be one component or a combination of two or more components.

### [Content of each component]

The content of each component in 100 mass% of the polyamide resin composition is preferably as follows.

The content of the aliphatic polyamide resin (A) is 55.0 to 96.0 mass%. When the content of the aliphatic polyamide resin (A) is less than 55.0 mass%, molding processing tends to be difficult. When the content of the aliphatic polyamide resin (A) is more than 96.0 mass%, the mechanical properties tend to be insufficiently exhibited. The content of the aliphatic polyamide resin (A) is preferably 68.0 to 90.0 mass%, and particularly preferably 72.0 to 90.0 mass%.

The content of the crosslinking agent (B) is 1.0 to 10.0 mass%. When the content of the crosslinking agent (B) is less than 1.0 mass%, strength such as tensile strength and tensile elastic modulus tends to be poor. When the content of the crosslinking agent (B) is more than 10.0 mass%, impact resistance such as elongation and impact strength tends to be adversely affected. The content of the crosslinking agent (B) is preferably 2.0 to 8.0 mass%, and particularly preferably 3.5 to 6.5 mass%.

The content of the glass fiber (C) is 3.0 to 28.0 mass%. When the content of the glass fiber (C) is less than 3.0 mass%, the mechanical properties thereof are poor. When the content of the glass fiber (C) is more than 28.0 mass%, the density of the molded body increases, and molding processability may be difficult. When the polyamide resin composition having such a content is used as a sliding member, the metal abrasion amount and the resin abrasion amount tend to be larger. The content of the glass fiber (C) is preferably 4.0 to 24.0 mass%, and particularly preferably 5.0 to 22.0 mass%.

The content of the optional additive (D) is 0 to 41.0 mass%. That is, the rest of the composition, other than the components (A), (B), and (C), is the optional additive (D). The content of the optional additive (D) is preferably 0 to 30.0 mass%, and particularly preferably 0 to 20.0 mass%.

The content of the heat resistance agent is arbitrary within the range not exceeding the content of the optional additive described above. The content of the heat resistance agent is preferably 0.1 to 1.5 mass%, more preferably 0.1 to 1.2 mass%, and particularly preferably 0.1 to 1.0 mass%. When the content of the heat resistance agent is 0.1 mass% or more, the effect of the stabilizer on thermal degradation of the molded body tends to be sufficiently exhibited. When the content of the heat resistance agent is 1.5 mass% or less, bleeding out from the molded body tends to be reduced as much as possible. When the inorganic heat resistance agent is a combination of the copper compound and potassium halide, the mass ratio between the copper compound and potassium halide is preferably 0.1 : 10 to 10 : 0.1, and particularly preferably 0.1 : 5 to 5 : 0.1.

Therefore, the total content of the components (A), (B), and (C) in 100 mass% of the polyamide resin composition is 59.0 to 100 mass%, preferably 70.0 to 100 mass%, and particularly preferably 80.0 to 100 mass%. The total content of the components (A), (B), and (C) in 100 mass% of the polyamide resin composition may be 98.5 mass% or less, 98.8 mass% or less, or 99.0 mass% or less.

### [Method for Producing Polyamide Resin Composition]

The method for producing the polyamide resin composition is not particularly limited, and a method including a step of mixing the components can be applied. Here, the optional additive (D) may be mixed with the components in a state where the optional additive (D) is contained in the aliphatic polyamide resin (A) and/or the crosslinking agent (B). For example, the initiator, the catalyst, and/or the stabilizer may be mixed with the components in a state where the initiator, the catalyst, and/or the stabilizer is contained in the aliphatic polyamide resin (A) and/or the crosslinking agent (B). The crosslinking agent (B) may be mixed with the components in a state where the crosslinking agent (B) is dissolved in a solvent. The crosslinking agent (B) may be mixed with the components in a state where the crosslinking agent (B) is supported on an inorganic filler functioning as a carrier.

The aliphatic polyamide resin (A), the crosslinking agent (B), the glass fiber (C), and the optional additive (D) can be mixed using a known melt-kneading machine. Examples of the known melt-kneading machine include a single-screw extruder, a twin-screw extruder, a Banbury mixer, a kneader, and a mixing roll. Examples of the specific method for mixing the components include: a method in which all the raw materials are blended and then melt-kneaded using a twin-screw extruder; a method in which some of the raw materials are blended and then melt-kneaded, and the rest of the raw materials is further blended thereinto and melt-kneaded; or a method in which some of the raw materials are blended, and then melt-kneaded, and the rest of the raw materials is mixed thereinto using a side feeder during the melt-kneading.

### [Molded Body Using Polyamide Resin Composition]

The polyamide resin composition can be used for producing a molded body. The molded body using the polyamide resin composition may be irradiated with an active energy ray. It is considered that when the polyamide resin composition is irradiated with an active energy ray, the crosslinking agent (B) is crosslinked to form a composition containing a crosslinked body of the crosslinking agent (B) and the aliphatic polyamide resin (A). It is also considered that when the crosslinked body has a functional group, the crosslinked body interacts with a terminal functional group or an amide group of the aliphatic polyamide to form a composite. Therefore, examples of the molded body using the polyamide resin composition include the first molded body, the second molded body, and the third molded body (hereinafter, they are also collectively referred to as "molded body using the polyamide resin composition") as follows.

The first molded body is a molded body including the polyamide resin composition.

The second molded body is a molded body obtained by molding the polyamide resin composition, followed by irradiation with an active energy ray.

The third molded body is a molded body obtained by irradiating an active energy ray to the polyamide resin composition, followed by molding.

### [First Molded Body]

The first molded body is a molded body including the polyamide resin composition. The first molded body may be a molded body obtained by molding the polyamide resin composition. The first molded body may have a multilayer structure including a layer of the polyamide resin composition (that is, a molded body made from the polyamide resin composition) and a layer of a polyolefin such as polyethylene or another thermoplastic resin. In this case, it is also possible to provide an adhesive layer between the layer of the polyamide resin composition and the layer of another thermoplastic resin such as polyolefin. In the case of a multilayer structure, the polyamide resin composition of the present invention can be used for either the outer layer or the inner layer.

### <Characteristics of First Molded Body>

In the first molded body, the molded body made from the polyamide resin composition preferably has a density of 1.10 to 1.25 g/cm³. When the density of the first molded body is within the above range, the molded body has good mechanical properties.

### <Method for Producing First Molded Body>

The method for producing the first molded body includes: a step of molding the polyamide resin composition to obtain a molded body of the polyamide resin composition. In the method for producing the first molded body, the polyamide resin composition is as described above.

### <Molding Method>

Examples of the molding method of the polyamide resin composition include injection molding, extrusion molding, blow molding, and rotation molding.

The method of injection-molding the polyamide resin composition to produce an injection-molded body is not particularly limited, and a known method can be used. For example, the method in accordance with ISO 294-1 is taken into consideration.

The method of extrusion-molding the polyamide resin composition to produce an extrusion-molded body is not particularly limited, and a known method can be used. In addition, it is also possible to obtain a multilayer structure by co-extrusion with a polyolefin such as polyethylene or another thermoplastic resin, followed by blow molding. In this case, it is also possible to provide an adhesive layer between the layer of the polyamide resin composition and the layer of another thermoplastic resin such as polyolefin. In the case of a multilayer structure, the polyamide resin composition of the present invention can be used for either the outer layer or the inner layer.

The method of blow-molding the polyamide resin composition to produce a blow-molded body is not particularly limited, and a known method can be used. In general, a parison is formed, and then subjected to blow molding by using a normal blow molding machine. The resin temperature when the parison is formed is preferably in a temperature range 10 to 70°C higher than the melting point of the polyamide resin composition.

The method of rotation-molding the polyamide resin composition to produce a rotation-molded body is not particularly limited, and a known method can be used. For example, the method described in WO 2019/054109 A1 is taken into consideration.

From the viewpoint that the polyamide resin composition has good injection moldability, the method for molding the polyamide resin composition is preferably injection molding.

When the first molded body has a multilayer structure including a layer of the polyamide resin composition and a layer of a polyolefin or another thermoplastic resin, the method for producing the first molded body can include a step of obtaining a molded body by co-extruding the polyamide resin composition with a polyolefin or another thermoplastic resin, followed by blow molding.

### [Second Molded Body]

The second molded body is a molded body obtained by molding the polyamide resin composition, followed by irradiation with an active energy ray.

In the second molded body, the method for molding the polyamide resin composition is as described above in the first molded body. The second molded body may be a molded body obtained by irradiating the first molded body with an active energy ray. The second molded body may be the layer of the polyamide resin composition in the multilayer structure described above in the first molded body.

### <Active Energy Ray>

Examples of the active energy ray include ultraviolet rays, electron rays, α-rays, β-rays, ion rays, particle rays, X-rays, and γ-rays. The active energy ray is preferably ultraviolet rays or electron rays.

Examples of the light source of ultraviolet rays include a xenon lamp, a low pressure mercury lamp, a high pressure mercury lamp, an ultra high pressure mercury lamp, a metal halide lamp, a carbon arc lamp, and a tungsten lamp. The irradiation time of the active energy ray can be appropriately set according to conditions such as the type of the crosslinking agent (B), the type of the photopolymerization initiator, the thickness of the molded body, and the ultraviolet source. From the viewpoint of workability, the irradiation time of the active energy ray is preferably 1 to 60 seconds. The irradiation amount of the active energy ray is preferably 300 to 3,000 mJ/cm² from the viewpoint of fast curability and workability. Furthermore, for the purpose of completing the crosslinking reaction of the crosslinking agent (B), heat treatment may be performed after ultraviolet irradiation.

When electron rays or the like are used as the active energy ray, the polyamide resin composition may contain no photopolymerization initiator. When electron rays are used as the active energy ray, an electron beam acceleration device having an energy of 100 to 500 eV is preferably used.

### <Characteristics of Second Molded Body>

The second molded body preferably has a density of 1.10 to 1.25 g/cm³. When the density of the second molded body is within the above range, the second molded body has good mechanical properties.

### <Method for Producing Second Molded Body>

The method for producing the second molded body includes: a step of molding the polyamide resin composition to obtain a molded body of the polyamide resin composition; and a step of irradiating an active energy ray to the molded body of the polyamide resin composition obtained in the above step. In the method for producing the second molded body, the polyamide resin composition, the method for molding the polyamide resin composition, and the energy ray are as described above.

### [Third Molded Body]

The third molded body is a molded body obtained by irradiating an active energy ray to the polyamide resin composition, followed by molding.

In the third molded body, the method for molding the polyamide resin composition is as described above in the first molded body. In the third molded body, the active energy ray is as described above in the second molded body. The third molded body may be the layer of the polyamide resin composition in the multilayer structure described above in the first molded body.

### <Characteristics of Third Molded Body>

The density of the third molded body, including the preferred embodiments thereof, is as described above in the second molded body.

### <Method for Producing Third Molded Body>

The method for producing the third molded body includes: a step of irradiating an active energy ray to the polyamide resin composition to obtain an activation energy-irradiated polyamide resin composition; and a step of molding the activation energy-irradiated polyamide resin composition obtained in the above step. In the method for producing the third molded body, the polyamide resin composition, the method for molding the polyamide resin composition, and the energy ray are as described above.

### [Uses of Polyamide Resin Composition and Molded Body]

The polyamide resin composition and/or the molded body of the polyamide resin composition can be used for various applications. Such applications include: sliding members intended for dynamic slidability, such as gears, cams, pulleys, bearings, bearing retainers, door checks, timing chain guides, and cable/hose support and guide equipment; automotive members such as spoilers, air intake ducts, intake manifolds, resonators, fuel tanks, gas tanks, hydraulic oil tanks, fuel filler tubes, fuel delivery pipes, and other various hoses, tubes, and tanks; mechanical members such as power tool housing and pipes; electric and electronic members such as tanks, tubes, hoses, and films; household and office supplies; building material related members; and furniture members.

The molded body using the polyamide resin composition is preferably used for members used in environments where the temperature environment greatly fluctuates, such as heat resistance and cold resistance, for example, driving members such as gears and belts in the field of vehicles such as automobiles, and sliding members such as sidewalls and belts of tires.

In addition, the molded body using the polyamide resin composition, being excellent in gas barrier properties, is also preferably a molded body that is in contact with a high pressure gas. Examples of the molded body in contact with a high pressure gas include tanks, tubes, hoses, and films in contact with a high pressure gas. The type of the gas is not particularly limited, and examples thereof include hydrogen, nitrogen, oxygen, helium, methane, butane, and propane. A gas having a small polarity is preferable, and hydrogen, nitrogen, and methane are particularly preferable.

The polyamide resin composition is particularly preferably used for sliding use. The molded body using the polyamide resin composition is more preferably an automobile member, a sliding member, or electric and electronic members, and particularly preferably a sliding member.

### Examples

Hereinafter, the present invention will be described in more detail with reference to Examples and Comparative Examples, but the present invention is not limited to these Examples.

The numerical values of Examples, Comparative Examples, and raw materials were measured by the following methods.

### <Relative Viscosity>

The relative viscosity is a value measured in accordance with JIS K6920-2, where 1 g of the polyamide resin is dissolved in 100 ml of 96% concentrated sulfuric acid, and measured at 25°C.

### <Density>

The density was measured in accordance with ISO 1183-3 (Gas pyknometer method), where an ISO TYPE-B test piece obtained from the polyamide resin composition was used. Here, 1.25 g/cm³ or less was regarded as acceptable.

### <Water Absorption>

An ISO TYPE-A test piece obtained from the polyamide resin composition was immersed in water at 80°C for 24 hours, and the water absorption was calculated from the mass difference of the test piece before and after immersion. Here, 1.7% or less was regarded as acceptable.

### <Mechanical Properties>

The following mechanical properties were measured using an ISO TYPE-A test piece and an ISO TYPE-B test piece obtained from the polyamide resin composition.

### (1) Tensile strength, tensile fracture strain, and tensile elastic modulus

An ISO TYPE-A test piece was prepared in accordance with ISO 294-1, and a tensile test was performed in an atmosphere of 23°C in accordance with ISO 527-1,2.

As for tensile strength, 90 MPa or more was regarded as acceptable.

As for tensile fracture strain, 4.0% or more was regarded as acceptable.

As for tensile elastic modulus, 3,500 MPa or more was regarded as acceptable.

### (2) Bending strength and bending elastic modulus

An ISO TYPE-B test piece was prepared in accordance with ISO 294-1, and a bending test was performed in an atmosphere of 23°C in accordance with ISO 178.

As for bending strength, 130 MPa or more was regarded as acceptable.

As for bending elastic modulus, 3,500 MPa or more was regarded as acceptable.

### (3) Charpy impact strength

An ISO TYPE-B test piece was prepared in accordance with ISO 294-1, and subjected to V-notching in accordance with ISO 179/1eA in post-processing. A Charpy impact test was performed in an atmosphere of 23°C with a hammer capacity of 0.5 to 5 J.

Here, 7 kJ/m² or more was regarded as acceptable.

### (4) Rockwell hardness (M scale)

The Rockwell hardness was measured at 23°C in accordance with ISO 6508-1, using an electric digital Rockwell hardness tester model ARD-P manufactured by Akashi Seisakusho, Ltd.

Here, 80 or more was regarded as acceptable.

### (5) Storage elastic modulus

Using a dynamic viscoelasticity measuring device RSA G-2 manufactured by TA Instruments, the storage elastic modulus at 80°C was measured in: three-point bending mode; span: 40 mm; temperature range: 30 to 220°C; frequency: 1 Hz; strain: 0.1%; and temperature rising rate: 3°C/min.

Here, 1,200 MPa or more was regarded as acceptable.

### <Abrasion Properties>

Using a 3 mmt flat plate prepared by injection molding, and using EFM-III-EN manufactured by ORIENTEC CO., LTD., the resin abrasion amount of the flat plate and the metal abrasion amount of the pin (for 3 pins), calculated from the weight difference before and after the test, were measured in: pin-on-disk method (3-pin type tip hemispherical shape); load: 57.7 kg (19.2 kg per pin); sliding speed: 2.2 cm/sec; 23°C; and sliding distance: 200 m.

As for resin abrasion amount, 45 mg or less was regarded as acceptable.

As for metal abrasion amount, 1.0 mg or less was regarded as acceptable.

From the above measured values, comprehensive evaluation was performed according to the following criteria.
○: satisfy all acceptance criteria of each of the above measured values
×: not satisfy one or more of the acceptance criteria of each of the above measured values

### [Examples 1 to 8, and Comparative Examples 1 and 3 to 6]

Components described in Table 1 were melt-kneaded with a twin screw kneader ZSK32-MC, having a cylinder diameter of 32 mm L/D47, at a cylinder temperature of 240°C, a screw rotation of 200 rpm, and a discharge amount of 40 kg/hrs, thereby preparing the intended polyamide resin composition pellets. By injection-molding the obtained polyamide resin composition pellets, the test piece 1 having a shape to be used in each test was prepared. The obtained test piece 1 was irradiated with an electron ray of 100 kGy at an electron ray energy of 4.8 MeV to prepare the test piece 2. The test piece 2 was used for evaluation of each test.

### [Comparative Example 2]

The intended polyamide resin composition pellets were prepared in the same manner as in Example 1 and the like. By injection-molding the obtained polyamide resin composition pellets, the test piece 3 having a shape to be used in each test was prepared. The obtained test piece 3 was used for evaluation of each test, without irradiation with electron rays.

The results are shown in Table 1.

The unit of the composition in the table is mass%, and the total amount of the resin composition is 100 mass%.

As the components described in Table 1, the following components were used.
PA610(1): Polyamide 610, F170, relative viscosity: 3.4, melting point: 220°C, amino group concentration: 30 µmol/g, manufactured by Shangdong Guangyin New Materials
PA610(2): Polyamide 610, F120, relative viscosity: 2.4, melting point: 223°C, amino group concentration: 35 µmol/g, manufactured by Shangdong Guangyin New Materials
PA612(1): Polyamide 612, A170, relative viscosity: 3.3, melting point: 215°C, amino group concentration: 20 µmol/g, manufactured by Shangdong Guangyin New Materials
PA612(2): Polyamide 612, A120, relative viscosity: 2.2, melting point: 217°C, amino group concentration: 25 µmol/g, manufactured by Shangdong Guangyin New Materials
PA12: Polyamide 12, UBESTA (registered trademark), relative viscosity: 2.3, melting point: 178°C, amino group concentration: 22 µmol/g, manufactured by UBE Corporation
Crosslinking agent: Triallyl isocyanurate, TAICROS (registered trademark), manufactured by Evonik Industries AG
Glass fiber (1): E-glass, chopped strand ECS 03T-211DE, cross section: circular shape, average diameter: 6 µm, manufactured by Nippon Electric Glass Co., Ltd.
Glass fiber (2): E-glass, chopped strand ECS 03T-920EW, cross section: flat shape, short axis 7 µm × long axis 28 µm, manufactured by Nippon Electric Glass Co., Ltd.
Glass fiber (3): R-glass, chopped strand HP3610XM, cross section: circular shape, average diameter: 10.5 µm, manufactured by Nippon Electric Glass Co., Ltd.
Heat resistance agent: Mixture of cuprous iodide and potassium iodide (CuI : KI = 1 : 6 (mass ratio))

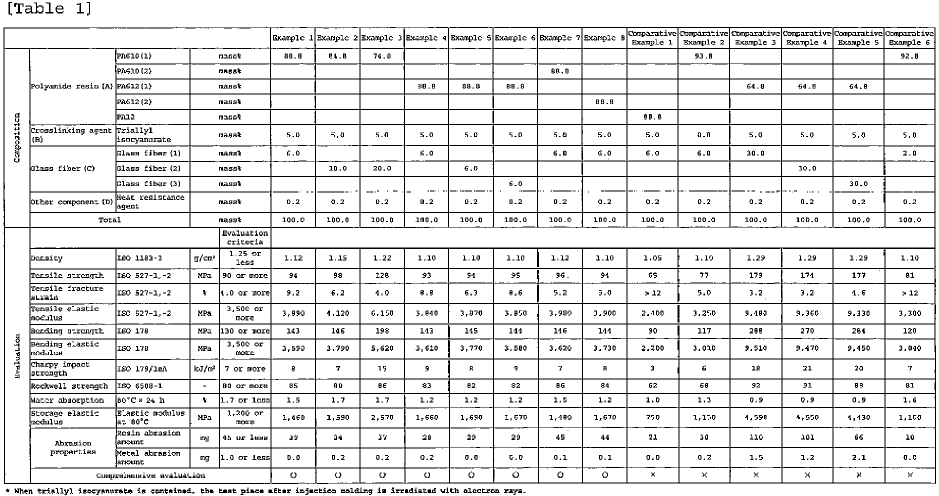

When Examples 1 to 6 and Examples 7 to 8 are compared, it is found that the aliphatic polyamide resin (A) having a relative viscosity of 2.5 to 3.5 has less resin abrasion amount.

The composition of Comparative Example 1 contains polyamide 12 as the aliphatic polyamide resin. Examples 1 to 8 were superior in mechanical strength to Comparative Example 1.

The composition of Comparative Example 2 contains no crosslinking agent. The molded body of Comparative Example 2 was poor in mechanical strength.

The compositions of Comparative Examples 3 to 5 have a glass fiber content of more than 28.0 mass%. Therefore, the molded bodies of Comparative Examples 3 to 5 had a high density, and the obtained molded bodies were too hard. The molded bodies of Comparative Examples 3 to 5 had more metal abrasion amount and resin abrasion amount.

The composition of Comparative Example 6 has a glass fiber content of less than 3.0 mass%. Therefore, the molded body of Comparative Example 6 was poor in mechanical strength.

From the above results, it can be seen that the polyamide resin composition of the present invention is suitable for sliding use. It is also apparent that the molded article obtained by molding the polyamide resin composition of the present invention is suitable as a sliding member.

## Claims

1. A polyamide resin composition comprising: 55.0 to 96.0 mass% of an aliphatic polyamide resin (A), 1.0 to 10.0 mass% of a crosslinking agent (B), and 3.0 to 28.0 mass% of a glass fiber (C) in 100 mass% of the polyamide resin composition,
wherein the aliphatic polyamide resin (A) is at least one selected from the group consisting of a polycondensate (A-1) between a diamine having 4 to 6 carbon atoms and a dicarboxylic acid having 8 to 13 carbon atoms, and a polycondensate (A-2) between a diamine having 8 to 13 carbon atoms and a dicarboxylic acid having 4 to 6 carbon atoms.

2. The polyamide resin composition according to claim 1, wherein the aliphatic polyamide resin (A) has a relative viscosity of 2.0 to 4.0.

3. The polyamide resin composition according to claim 1, wherein the polycondensate (A-1) is at least one selected from the group consisting of polytetramethylene suberamide (polyamide 48), polytetramethylene azelamide (polyamide 49), polytetramethylene sebacamide (polyamide 410), polytetramethylene undecamide (polyamide 411), polytetramethylene dodecamide (polyamide 412), polytetramethylene tridecamide (polyamide 413), polyhexamethylene suberamide (polyamide 58), polypentamethylene azelamide (polyamide 59), polypentamethylene sebacamide (polyamide 510), polypentamethylene undecamide (polyamide 511), polypentamethylene dodecamide (polyamide 512), polypentamethylene tridecamide (polyamide 513), polyhexamethylene suberamide (polyamide 68), polyhexamethylene azelamide (polyamide 69), polyhexamethylene sebacamide (polyamide 610), polyhexamethylene undecamide (polyamide 611), polyhexamethylene dodecamide (polyamide 612), and polyhexamethylene tridecamide (polyamide 613).

4. The polyamide resin composition according to claim 1, wherein the polycondensate (A-2) is at least one selected from the group consisting of polyoctamethylene succinamide (polyamide 84), polyoctamethylene glutaramide (polyamide 85), polyoctamethylene adipamide (polyamide 86), polynonamethylene succinamide (polyamide 94), polynonamethylene glutaramide (polyamide 95), polynonamethylene adipamide (polyamide 96), polydecamethylene succinamide (polyamide 104), polydecamethylene glutaramide (polyamide 105), polydecamethylene adipamide (polyamide 106), polyundecamethylene succinamide (polyamide 114), polyundecamethylene glutaramide (polyamide 115), polyundecamethylene adipamide (polyamide 116), polydodecamethylene succinamide (polyamide 124), polydodecamethylene glutaramide (polyamide 125), polydodecamethylene adipamide (polyamide 126), polytridecamethylene succinamide (polyamide 134), polytridecamethylene glutaramide (polyamide 135), and polytridecamethylene adipamide (polyamide 136).

5. The polyamide resin composition according to claim 1, wherein the crosslinking agent (B) is at least one selected from the group consisting of triallyl cyanurate, triallyl isocyanurate, trimethallyl isocyanurate, diallyl phthalate, and diallyl benzene phosphonate.

6. The polyamide resin composition according to claim 1, comprising 0.1 to 1.5 mass% of a heat resistance agent in 100 mass% of the polyamide resin composition.

7. The polyamide resin composition according to claim 1, being for sliding use.

8. A molded body comprising the polyamide resin composition according to any one of claims 1 to 7.

9. A molded body obtained by molding the polyamide resin composition according to any one of claims 1 to 7, followed by irradiation with an active energy ray.

10. A molded body obtained by irradiating an active energy ray to the polyamide resin composition according to any one of claims 1 to 7, followed by molding.

11. The molded body according to claim 9, having a density of 1.10 to 1.25 g/cm³.

12. The molded body according to claim 10, having a density of 1.10 to 1.25 g/cm³.

13. The molded body according to claim 8, being a sliding member.

14. The molded body according to claim 9, being a sliding member.

15. The molded body according to claim 10, being a sliding member.

16. The molded body according to claim 11, being a sliding member.

17. The molded body according to claim 12, being a sliding member.

18. A method for producing a molded body, the method comprising: a step of molding the polyamide resin composition according to any one of claims 1 to 7 to obtain a molded body of the polyamide resin composition; and a step of irradiating an active energy ray to the molded body of the polyamide resin composition obtained in the above step.

19. A method for producing a molded body, the method comprising: a step of irradiating an active energy ray to the polyamide resin composition according to any one of claims 1 to 7 to obtain an active energy ray-irradiated polyamide resin composition; and a step of molding the active energy ray-irradiated polyamide resin composition obtained in the above step.
